# FASCICULE DE BREVET EUROPEEN

(11) **EP 2 718 637 B1**
(45) Date de publication et mention de la délivrance du brevet: **22.11.2017**
(21) Numéro de dépôt: 12731518.2
(22) Date de dépôt: 07.06.2012
(51) Int. Cl.: F24J 2/46, F24J 2/48, C23C 8/14, C23C 8/18, C23C 8/10, F24J 2/06

(54) **PROCÉDÉ DE RÉALISATION D'UN ÉLÉMENT ABSORBEUR DE RAYONNEMENTS SOLAIRES POUR CENTRALE SOLAIRE THERMIQUE À CONCENTRATION**
VERFAHREN ZUR HERSTELLUNG EINES ELEMENTS ZUR ABSORPTION VON SONNENSTRAHLUNG FÜR EIN THERMISCHES SOLARKRAFTWERK
PROCESS FOR PRODUCING AN ELEMENT FOR ABSORBING SOLAR RADIATION FOR A THERMAL CONCENTRATING SOLAR POWER PLANT

(30) Priorité: 09.06.2011 FR 1101773
(43) Date de publication de la demande: 16.04.2014
(73) Titulaire: Commissariat à l'Énergie Atomique et aux Énergies Alternatives, 75015 Paris (FR)
(72) Inventeur: FLEURY, Gatien, F-04800 Gréoux-les-Bains (FR); COUTURIER, Raphaël, F-38360 Sassenage (FR); DUBARRY, Christophe, F-38640 Claix (FR); MOLLARD, Carole, F-38730 Panissage (FR); SICARDY, Olivier, F-38120 Saint-Egrève (FR)
(74) Mandataire: Talbot, Alexandre
(86) Numéro de dépôt international: PCT/FR2012/000229
(87) Numéro de publication internationale: WO 2012/168577

(56) Documents cités:
- EP-A1- 1 992 716
- WO-A1-98/42889
- GB-A- 2 032 463
- JP-A- 2 044 149
- US-A- 2 917 817
- US-A- 3 125 471
- US-A- 4 097 311
- US-A- 4 268 324
- US-A- 4 416 916
- US-B1- 6 612 898
- AVILA-GARCIA A ET AL: "Thermally and air-plasma-oxidized titanium and stainless steel plates as solar selective absorbers", SOLAR ENERGY MATERIALS AND SOLAR CELLS, ELSEVIER SCIENCE PUBLISHERS, AMSTERDAM, NL, vol. 90, no. 15, 22 septembre 2006 (2006-09-22), pages 2556-2568, XP028002413, ISSN: 0927-0248, DOI: 10.1016/J.SOLMAT.2006.03.032 [extrait le 2006-09-22]

## Description

### Domaine technique de l'invention

L'invention est relative à un élément absorbeur de rayonnements solaires, pour centrale solaire thermique à concentration et à son procédé de réalisation, avec notamment la formation d'un revêtement sélectif sur une surface extérieure d'un substrat en acier inoxydable.

### État de la technique

Une centrale solaire thermique à concentration, également appelée centrale solaire thermodynamique (CSP pour « Concentrating Solar Power Plant ») est une centrale destinée à concentrer les rayons du soleil, à l'aide de miroirs pour chauffer un fluide caloporteur. Le fluide caloporteur sert alors de source chaude dans un cycle thermodynamique en vue de produire de l'électricité. La concentration des rayonnements solaires permet d'atteindre des températures plus élevées et de bénéficier d'une conversion thermodynamique importante.

Il existe différentes techniques pour concentrer les rayonnements solaires, pour transporter et éventuellement stocker la chaleur et pour convertir la chaleur en électricité. Dans tous les cas, un des éléments essentiels d'une centrale solaire thermique à concentration est l'élément absorbeur de rayonnements solaires qui forme une partie du récepteur.

Afin de maximiser le rendement de l'absorbeur, celui-ci comporte en général un revêtement, appelé revêtement sélectif ou traitement sélectif. Le revêtement sélectif est destiné à permettre une absorption maximale de l'énergie solaire incidente tout en réémettant le moins possible de rayonnements infrarouges (principe du corps noir). En particulier, un tel revêtement sélectif est considéré comme parfait s'il absorbe toutes les longueurs d'ondes inférieures à une longueur d'onde de coupure et réfléchit toutes les longueurs d'ondes supérieures à cette même longueur d'onde de coupure. La longueur d'onde de coupure optimale dépend de la température de fonctionnement de l'élément absorbeur considéré et elle est en général comprise entre 1,5µm et 2,5µm. Elle est, par exemple, d'environ 1,8 µm pour une température de l'ordre de 650 K.

Il existe différents types de revêtements sélectifs, chacun comportant en général une couche antireflet destinée à limiter la réflexion des rayons solaires incidents.

En particulier, un type de revêtement sélectif consiste à venir déposer, sur la surface de l'absorbeur, un matériau possédant intrinsèquement les propriétés souhaitées. Ce type de matériau est plutôt rare et. le plus performant d'entre eux est le ZrB₂, notamment lorsqu'il est associé à une couche antireflet en Si₃N₄, en SiO₂ ou en Al₂O₃.

Une autre voie consiste à structurer la surface de l'absorbeur, pour créer les conditions favorables d'une absorption (principe de la réflexion multiple ou gradient d'indice de réfraction, en fonction de l'échelle de la structuration de surface), tout en limitant les émissions infrarouges. Le principal frein à ce type de traitement sélectif est d'ordre technologique : il n'existe actuellement pas de moyen de production industriel à grande échelle d'une structuration submicronique adaptée.

Le revêtement sélectif peut aussi consister en un filtre interférentiel, formé par un empilement de plusieurs couches minces d'épaisseurs soigneusement contrôlées, typiquement de l'ordre de quelques nanomètres.

Ce type de traitement sélectif permet d'obtenir d'excellentes performances, mais sa réalisation est relativement difficile à mettre en oeuvre.

À titre d'exemple, la demande de brevet WO-A-2009/051595 propose un revêtement sélectif solaire de cette famille de revêtement pour recouvrir la surface extérieure d'un tube absorbeur de rayonnement solaire, typiquement en acier inoxydable. Le revêtement sélectif comporte un empilement de plusieurs couches ayant chacune une fonction et une épaisseur déterminées par simulation optique. Dans un mode particulier de réalisation, le tube absorbeur de rayonnement solaire est successivement recouvert par une succession de bicouches constitués par une couche en matériau réfléchissant les rayonnements IR et par une couche en matériau absorbant le rayonnement solaire, suivie par l'application d'une couche antireflet. Le tube absorbeur de rayonnement solaire est, par exemple, en acier inoxydable de structure austénitique, par exemple de type AlSI 316, 321, 347 ou 304L.

Enfin, une autre option concerne un empilement non interférentiel, de quelques couches minces ayant chacune une fonction optique complémentaire, On retrouve en général un empilement de trois couches :
- la première couche située à l'interface avec le substrat fait office de miroir infrarouge,
- la deuxième couche destinée à absorber le rayonnement solaire tout en ayant une faible émissivité infrarouge,
- et la troisième couche ayant une fonction d'anti-reflet.
De nombreuses solutions permettant de réaliser des traitements sélectifs performants selon ce principe ont été rapportées dans la littérature. En particulier, il existe des empilements incluant des couches anti-diffusives qui permettent d'allonger la durée desdits empilements.

Au moins une partie du revêtement sélectif peut être formée directement sur le substrat lors d'une étape d'oxydation.
Dans le brevet US 6 612 898, le substrat est chauffé sous un mélange gazeux contenant soit un gaz inerte et de l'eau jusqu'à 1% entre 300°C et 700°C, soit un gaz inerte et de l'oxygène en faible proportion, de 1 à 500ppm entre 300°C et 700°C, soit de l'oxygène et au moins 100ppm d'ozone entre 20°C et 300°C.
Dans le brevet US 2 917 817, le substrat est chauffé pendant quelques minutes à 750°C afin de former un revêtement à base d'oxyde.
Le brevet FR 2 325 002 décrit une étape d'oxydation par trempage dans un bain oxydant à une température comprise entre 70°C à 120°C.

L'ensemble de ces types de revêtements sélectifs ne permet pas de répondre simultanément aux besoins de performance et de tenue dans le temps, notamment sous une atmosphère oxydante. En effet, les revêtements actuellement disponibles commercialement, pour des températures d'utilisation élevées (typiquement supérieures à 400°C), nécessitent l'utilisation d'une enveloppe de protection sous vide, qui d'une part augmente les coûts de fabrication et d'autre part pose des problèmes de stabilité dans le temps.

### Objet de l'invention

L'objet de l'invention tend à proposer un élément absorbeur de rayonnements solaires, pour centrale solaire thermique à concentration, comprenant un revêtement sélectif performant, durable et stable, non seulement pour des températures d'utilisation supérieures à 400°C, mais aussi dans une atmosphère oxydante tel que l'air.

Selon l'invention, cet objet est atteint par un procédé de réalisation d'un élément absorbeur de rayonnements solaires, pour centrale solaire thermique à concentration, comprenant la formation d'un revêtement sélectif sur une surface extérieure d'un substrat en acier inoxydable,
caractérisé en ce que la formation du revêtement sélectif comporte les étapes successives suivantes :
- le traitement de surface par polissage du substrat
- et le traitement thermique du substrat, en atmosphère oxydante contenant au moins 5% en volume d'un précurseur en oxygène, dans une gamme de températures comprises entre 550°C et 650°C, pour former à la surface extérieure du substrat, au moins une couche mince superficielle intrinsèquement sélective, ayant une épaisseur supérieure à 70nm de manière à être intrinsèquement sélective, et en ce que l'acier inoxydable du substrat présente une teneur en aluminium supérieure à 0,5% en poids.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

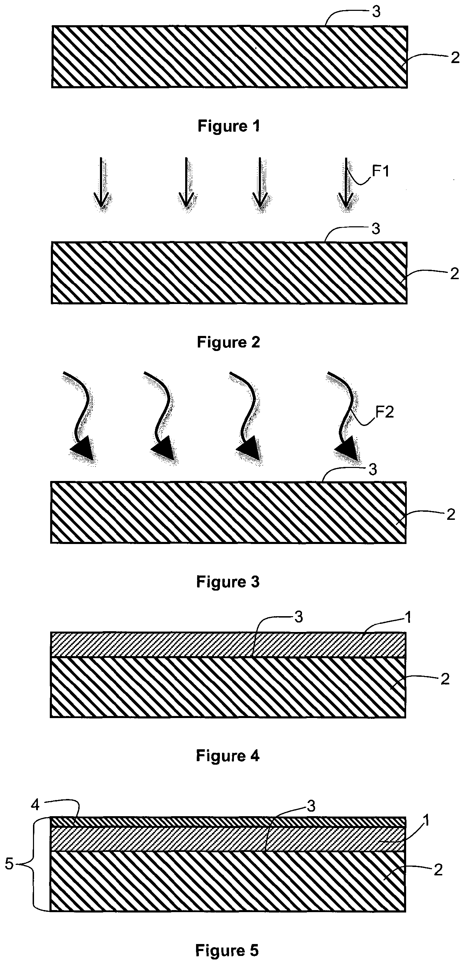

- les figures 1 à 5 représentent schématiquement et en coupe différentes étapes d'un procédé de réalisation d'un élément absorbeur de rayonnement solaire, selon l'invention.

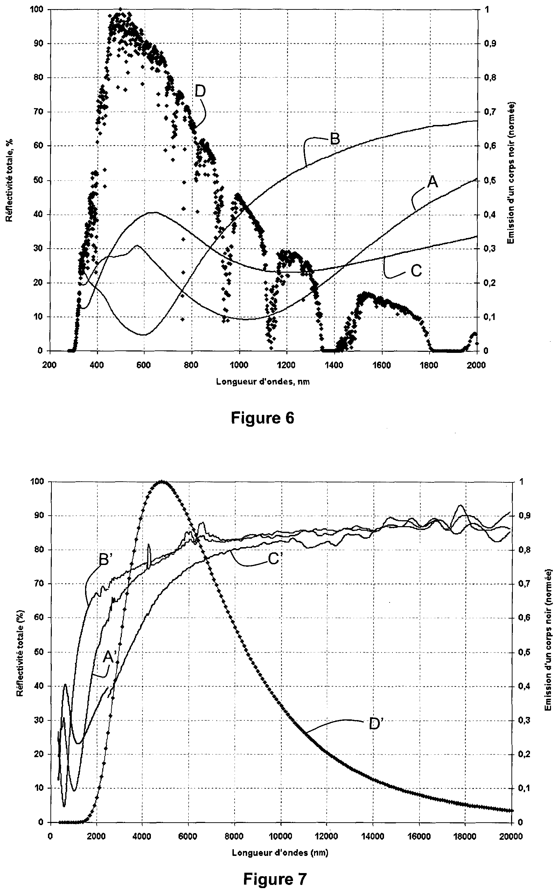

- la figure 6 représente le spectre de réflexion sur une gamme de longueurs d'onde comprise entre 200nm et 2000nm, d'un substrat en acier de nuance Cr Al 22 5 (Y), traité thermiquement après polissage mécanique, à des températures de traitement thermique respectives de 450°C (Courbe A), 600°C (Courbe B) et 800°C (Courbe C), en comparaison au spectre solaire normé ASTM G173-03 (Courbe D).
- la figure 7 représente le spectre de réflexion sur une gamme de longueurs d'onde comprise entre 200 et 20000nm, d'un substrat en acier de nuance Cr Al 22 5 (Y), traité thermiquement après polissage mécanique, à des températures de traitement thermique respectives de 450°C (Courbe A'), 600°C (Courbe B') et 800°C (Courbe C'), en comparaison à celui du corps noir à 600K (Courbe D').

### Description de modes préférentiels de l'invention

Il est proposé de réaliser un élément absorbeur de rayonnements solaires convenant particulièrement aux centrales solaires thermiques à concentration et remédiant aux inconvénients de l'art antérieur, en sélectionnant spécifiquement l'acier inoxydable entrant dans la composition du substrat, sur lequel est formé le revêtement sélectif.

La sélection particulière de l'acier inoxydable composant le substrat est, en effet, réalisée pour permettre la formation, dans des conditions opératoires particulières, d'une couche mince superficielle intrinsèquement sélective, à la surface extérieure du substrat.

Il a, en effet, été trouvé que le fait que le substrat soit composé par un acier inoxydable présentant une teneur en aluminium supérieure à 0,5% en poids permet de former, dans des conditions opératoires particulières, une couche mince superficielle intrinsèquement sélective, à la surface extérieure dudit substrat.

Par couche mince superficielle intrinsèquement sélective, on entend une couche mince superficielle qui, de part sa nature intrinsèque, est capable d'absorber un maximum d'énergie solaire incidente et de réémettre un minimum de rayonnement infrarouge.

Par teneur en aluminium d'un acier inoxydable, on entend le pourcentage en poids d'aluminium, par rapport au poids total des éléments constituant l'acier inoxydable en question. Il s'agit de la teneur ou du pourcentage minimum généralement rapporté pour une nuance particulière d'acier inoxydable, selon les normes en vigueur et notamment la norme européenne EN 10088-1 :2005.

Comme illustré sur les figures 1 à 4, la couche mince superficielle 1 est, en particulier, obtenue en faisant subir au substrat 2, les étapes successives suivantes :
- traitement de surface par polissage mécanique (flèches F1 sur la figure 2) et
- traitement thermique (flèches F2 sur la figure 3), en atmosphère oxydante (en particulier sous air sec ou faiblement humide), dans une gamme de températures comprise entre 550°C et 650°C.
Par atmosphère oxydante, on entend d'une manière générale de l'air, de l'air enrichi en dioxygène ou encore de l'air enrichi en eau. Selon l'invention, l'atmosphère contient au moins 5% en volume d'un précurseur en oxygène, par exemple O₂.
Le substrat 2, en acier inoxydable ayant une teneur supérieure à 0,5%, présente, notamment, une surface extérieure 3 sur laquelle est réalisée le revêtement sélectif. Il peut être de tout type de forme, adapté pour son utilisation comme élément absorbeur de rayonnements solaires sélectif, pour centrale solaire thermique à concentration (par exemple centrale solaire de type Fresnel ou cylindro-parabolique).
Par ailleurs, l'acier inoxydable du substrat 2 peut être, plus spécifiquement, choisi parmi les aciers inoxydables présentant une teneur en chrome comprise entre 15% en poids et 25% en poids. De plus, selon un développement particulier, l'acier inoxydable du substrat présente avantageusement une teneur en aluminium comprise entre 4% en poids et 6% en poids.
Ainsi, l'acier inoxydable est, avantageusement, un alliage de type FeCrAl (alliage à base de fer, contenant du chrome et entre 4% et 6% en poids d'aluminium), qui fait partie de la famille des alliages alumino-formeurs, c'est-à-dire les alliages permettant la formation d'alumine. Parmi les aciers de type FeCrAl, on peut citer l'acier de désignation numérique 1.4767, notamment celui commercialisé sous le nom commercial d'Aluchrom Y (également connu sous la nuance Cr Al 22 5 (Y)) par la société ThyssenKrupp VDM. La composition de l'acier commercialisé sous le nom d'Aluchrom Y est donnée dans le tableau ci-dessous. Avantageusement, l'acier inoxydable présente une teneur en chrome comprise entre 20% en poids et 22% en poids.

**Tableau**

| | | **Ni** | **Cr** | **Fe** | **C** | **Mn** | **Si** | **Al** | **Ti** | **Zr** | **Y** |
|---|---|---|---|---|---|---|---|---|---|---|---|
| (% en poids) | Min | - | 20,0 | | 0,01 | - | - | 5,0 | 0,01 | 0,01 | 0,05 |
| | Max | 0,30 | 22,0 | balance | 0,10 | 0,50 | 0,30 | 6,0 | 0,10 | 0,10 | 0,15 |

Il est à noter que, selon d'autres développements particuliers, l'acier inoxydable du substrat 2 peut aussi être choisi :
- parmi les aciers inoxydables ferritiques, dès lors qu'ils comportent une teneur en aluminium supérieure à 0,5%. On citera, par exemple, les aciers inoxydables ferritiques désignés respectivement par les symboles X10CrAlSi13, X10CrAlSi18, X10CrAlSi25, X3CrAlTi18-2 et X10CrAlSi7, selon la norme EN 10027-1.
- parmi les aciers inoxydables austénitiques, dès lors qu'ils comportent une teneur en aluminium supérieure à 0,5%.

Pour la réalisation du revêtement sélectif recouvrant la surface extérieure 3 du substrat 2, ladite surface extérieure 3 est donc, au préalable, polie selon des procédés de polissage classiques (mécanique, électrolytique,...). L'opération de polissage est symbolisée par les flèches F1 sur la figure 2. Le polissage est, en particulier, réalisé par polissage mécanique. A titre d'exemple, le polissage mécanique peur être réalisé à l'aide d'un papier à polir de taille de grains décroissante (de P220 à P1200) et d'un feutre imbibé d'une suspension contenant les particules d'alumine ayant typiquement 3 µm de diamètre.

Cette opération de traitement de surface par polissage permet, notamment, de maîtriser l'état d'oxydation de la surface extérieure 3 du substrat 2, avant l'opération de traitement thermique et elle a une influence sur l'émissivité de la surface extérieure 3 dans la gamme des infrarouges.

La rugosité Ra de la surface extérieure 3 du substrat 2, après polissage, est, préférentiellement, comprise entre 0,05µm et 0,4µm, selon la norme NF ISO 4287, ce qui permet d'obtenir une couche présentant une bonne absorption tout en présentant une faible émissivité. Par bonne absorption, on entend une absorption supérieure à 0,75 et par faible émissivité, une émissivité inférieure à 0,25. Plus la rugosité est faible et plus l'émissivité et l'absorption seront faibles. Une rugosité comprise entre 0,05µm et 0,4µm permet d'obtenir à la fois une faible émissivité et une bonne absorption du rayonnement solaire reçu tout en étant facilement réalisable d'un point de vue industriel.
Ensuite, le substrat 2 subit une opération de traitement thermique afin de former, à l'interface avec la surface extérieure 3 du substrat 2, une couche mince superficielle 1. Cette opération de traitement thermique est symbolisée par les flèches F2 sur la figure 3. Cette couche mince superficielle 1 est, en particulier, obtenue par oxydation de certains éléments, et notamment de l'aluminium, contenus dans l'acier inoxydable composant le substrat 2. Elle est donc essentiellement composée d'oxyde. De plus, son épaisseur est très faible, typiquement inférieure 2 µm. Selon l'invention, l'épaisseur est supérieure à 70nm. Ainsi, la couche mince superficielle 1 présente des propriétés intrinsèquement sélectives. Plus particulièrement, l'épaisseur de la couche mince superficielle 1 est comprise entre 100 et 1000nm. Préférentiellement, la couche mince superficielle 1 est donc en contact direct avec le substrat 2 en acier inoxydable. Cette couche mince superficielle 1 étant formée par oxydation du substrat, elle possède une excellente adhérence comparée notamment à d'autres couches déposées par dépôts en couches minces comme par exemple par dépôt physique en phase vapeur (ou PVD pour l'anglais physical vapor deposition) ou encore par dépôt chimique en phase vapeur (ou CVD pour l'anglais chemical vapor deposition).

De plus, la couche mince superficielle 1 peut être revêtue de manière classique par une couche antireflet 4, l'ensemble formant alors le revêtement sélectif 5 de l'élément absorbeur de rayonnements solaires. La couche antireflet 4 est, par exemple, une couche en oxyde de silicium, en alumine ou en nitrure de silicium. Elle est, par exemple, formée par une technique de dépôt sous vide, telle que le dépôt physique en phase vapeur (pulvérisation cathodique ou évaporation) ou en encore par dépôt chimique en phase vapeur. Cette couche aura avantageusement un indice de réfraction compris entre 1,5 et 3,5 et avantageusement un coefficient d'extinction très faible afin d'éviter une augmentation d'émissivité. Avantageusement, la présence de la couche antireflet 4 ne doit pas augmenter de plus de 5% l'émissivité du revêtement sélectif 5 de l'élément absorbeur. L'épaisseur de cette couche est avantageusement compris entre 50nm et 200nm afin d'obtenir les meilleures performances.

À titre d'exemple, la surface extérieure d'un substrat en acier de désignation numérique 1.4767, commercialisé sous le nom commercial d'Aluchrom Y par la société ThyssenKrupp VDM, a été polie à l'aide d'une polisseuse Tegrasystem 21/5 et des disques de polissage magnétique d'un grain variant de P220 à P1200, puis à l'aide d'un feutre imprégné d'une suspension d'alumine de taille de grain de 3µm. Le substrat est ensuite soumis à un traitement thermique, sous air sec, pendant 48 heures à une température de 600°C. L'opération de traitement thermique provoque la formation d'une couche mince superficielle oxydée, directement à la surface extérieure du substrat.

Cette couche mince superficielle présente un caractère intrinsèquement sélectif. En effet, comme illustré sur les figures 6 et 7, une fois le traitement thermique réalisé, la réflectivité totale dudit substrat a été mesurée sur une gamme de longueur d'onde allant de 320nm à 20000nm (Courbes B et B').

Ces mesures de réflectivité permettent de calculer les grandeurs d'absorption et d'émissivité, qui sont les propriétés de surface recherchées. Les mesures ont été réalisées dans la gamme du rayonnement visible (0,32µm -2,5µm), grâce à un spectrophotomètre lambda 950 de Perkin Elmer, qui possède une sphère d'intégration de 150 mm de diamètre, revêtue de BaSO₄. Dans la gamme 2,5-25µm, la réflectance est mesurée grâce à un spectrophotomètre Equinox 55, fabriqué par Bruker et qui possède une sphère d'intégration revêtue d'or qui est fortement réflecteur pour ces longueurs d'onde.

À titre de comparaison, les spectres de réflexion sont également reportés sur les figures 6 et 7 pour deux autres substrats en acier de désignation numérique 1.4767, ayant subi le même polissage mécanique et le même traitement thermique, mais à des températures de traitement différentes : 450°C pour le premier substrat (courbes A et A') et 800°C pour le second substrat (courbes C et C'). De plus, la figure 6 comporte le spectre solaire (Courbe D) tandis que le spectre d'émissivité d'un corps noir est reporté sur la figure 7 (Courbe D').

On observe, notamment, sur la figure 6 que pour les substrats ayant subit des traitements d'oxydation à 450°C et 800°C (courbes A et C), la réflectivité autour du maximum du rayonnement solaire (vers 500 nm) est relativement haute (respectivement d'environ 28% et 35%), alors que l'échantillon oxydé à 600°C (courbe B) possède une réflectivité faible (∼8%) à cette longueur d'onde. Par ailleurs, le substrat ayant subit un traitement d'oxydation à 600°C (courbe B') possède une réflectivité supérieure à celui des substrats ayant subit un traitement d'oxydation à 450°C et 800°C (courbes A' et C'), à partir des longueurs d'onde de 900 nm. Une réflectivité plus importante dans la gamme 6000-14000nm de longueur d'onde signifie par ailleurs que l'on aura une émissivité infrarouge plus faible.

Il a également été constaté que l'oxyde formé à la surface extérieure du substrat est un oxyde stable à des températures supérieures à la température d'utilisation de l'élément absorbeur de rayonnements solaires (typiquement supérieure à 400°C) et dans des conditions oxydantes pour le substrat (notamment sous air). Des mesures réalisées par XPS (spectrométrie de photoélectrons X) ont notamment mis en évidence la présence d'une couche mince superficielle composée d'oxydes de fer, aluminium et chrome à la surface extérieure de l'alliage.
Dans la mesure où la couche responsable des bonnes propriétés optiques de la surface a été formée à plus haute température que sa température d'utilisation, l'oxyde ainsi obtenu, qui contient notamment du fer et de l'aluminium, est stable au cours de son utilisation, y compris pour un usage en atmosphère oxydante.
Ainsi, la formation d'une telle couche mince superficielle permet au revêtement sélectif, qui la comprend, d'être performant, durable et stable pour des températures d'utilisation supérieures à 400°C, jusqu'à typiquement 500°C et, y compris en atmosphère oxydante notamment dans l'air. De plus, la réalisation d'une telle couche mince superficielle est facile à mettre en oeuvre et peu onéreuse, puisque le traitement thermique permettant de réaliser l'oxydation superficielle du substrat est un traitement simple à mettre en place à l'échelle industrielle.
Il est également proposé de réaliser une centrale solaire thermique à concentration selon un procédé comportant les étapes suivantes :
- fournir un substrat 2 en acier inoxydable ayant une surface extérieure 3 recouverte par un revêtement sélectif 5 au rayonnement solaire, le substrat 2 étant destiné à être parcouru par un fluide échangeur de chaleur, par exemple le substrat est sous la forme d'un tube,
- prévoir un miroir agencé pour concentrer une partie du rayonnement solaire reçu sur le substrat 2, procédé caractérisé en ce qu'il comprend la formation d'un revêtement sélectif (5) sur une surface extérieure (3) d'un substrat (2) en acier inoxydable, selon l'une quelconque des revendications 1 à 12, ladite formation du revêtement sélectif (5) comprenant les étapes suivantes:
   - fournir un substrat 2 en acier inoxydable ayant une teneur en aluminium supérieure à 0,5% en poids,
   - polir la surface extérieure 3 du substrat,
   - former une couche mince superficielle (1) sur la surface extérieure (3) polie du substrat (2) au moyen d'un traitement thermique compris entre 550°C et 650°C dans une atmosphère oxydante, contenant au moins 5% en volume d'un précurseur en oxygène, la couche superficielle (1) ayant une épaisseur supérieure à 70nm de manière à être intrinsèquement sélective.

## Revendications

1. Procédé de réalisation d'un élément absorbeur de rayonnements solaires, pour centrale solaire thermique à concentration, comprenant la formation d'un revêtement sélectif (5) sur une surface extérieure (3) d'un substrat (2) en acier inoxydable,
dans lequel l'acier inoxydable du substrat (2) présente une teneur en aluminium supérieure à 0,5% en poids, **caractérisé en ce que** la formation du revêtement sélectif (5) comporte les étapes successives suivantes :
- le traitement de surface par polissage du substrat (2)
- et le traitement thermique du substrat (2), en atmosphère oxydante contenant au moins 5% en volume d'un précurseur en oxygène, dans une gamme de températures comprises entre 550°C et 650°C, pour former à la surface extérieure du substrat (2), au moins une couche superficielle (1) ayant une épaisseur supérieure à 70nm de manière à être intrinsèquement sélective.

2. Procédé selon la revendication 1, **caractérisé en ce que** l'acier inoxydable du substrat (2) est choisi parmi les aciers inoxydables présentant une teneur en chrome comprise entre 15% en poids et 25% en poids.

3. Procédé selon la revendication 2, **caractérisé en ce que** l'acier inoxydable du substrat (2) est choisi parmi les aciers inoxydables présentant une teneur en chrome comprise entre 20% en poids et 22% en poids.

4. Procédé selon l'une des revendications 1 à 3, **caractérisé en ce que** l'acier inoxydable du substrat (2) est un acier inoxydable ferritique.

5. Procédé selon la revendication 4, **caractérisé en ce que** l'acier inoxydable du substrat (2) est choisi parmi les aciers inoxydables ferritiques désignés respectivement par les symboles X10CrAlSi13, X10CrAlSi18, X10CrAlSi25, X3CrAlTi18-2 et X10CrAlSi7.

6. Procédé selon l'une des revendications 1 à 2, **caractérisé en ce que** l'acier inoxydable du substrat (2) est un acier inoxydable austénitique.

7. Procédé selon l'une quelconque des revendications 2 à 3, **caractérisé en ce que** l'acier inoxydable du substrat (2) présente une teneur en aluminium comprise entre 4% en poids et 6% en poids.

8. Procédé selon la revendication 7, **caractérisé en ce que** l'acier inoxydable du substrat (2) est un acier de type FeCrAl.

9. Procédé selon la revendication 8, **caractérisé en ce que** l'acier de type FeCrAl est un acier de désignation numérique 1.4767.

10. Procédé selon l'une quelconque des revendications 1 à 9, **caractérisé en ce que** la couche superficielle (1) a une épaisseur comprise entre 100nm et 1000nm.

11. Procédé selon l'une quelconque des revendications 1 à 10, **caractérisé en ce que** la rugosité de la surface extérieure (3) du substrat (2), après polissage, est comprise entre 0,05µm et 0,4µm.

12. Procédé selon l'une quelconque des revendications 1 à 11, **caractérisé en ce que** la formation du revêtement sélectif (5) comporte une étape de formation d'une couche anti-reflet (4) sur la couche mince superficielle (1)

13. Procédé de réalisation, d'une centrale solaire thermique à concentration comportant les étapes suivante :
- fournir un substrat (2) en acier inoxydable ayant une surface extérieure (3) recouverte par un revêtement sélectif (5) au rayonnement solaire, le substrat (2) étant destiné à être parcouru par un fluide échangeur de chaleur,
- prévoir un miroir agencé pour concentrer une partie du rayonnement solaire reçu sur le substrat (2),
procédé **caractérisé en ce qu'**il comprend la formation d'un revêtement sélectif (5) sur une surface extérieure (3) d'un substrat (2) en acier inoxydable, selon l'une quelconque des revendications 1 à 12, ladite formation du revêtement sélectif (5) comprenant les étapes suivantes :
- fournir un substrat (2) en acier inoxydable ayant une teneur en aluminium supérieure à 0,5% en poids,
- polir la surface extérieure (3) du substrat,
- former une couche mince superficielle (1) sur la surface extérieure (3) polie du substrat (2) au moyen d'un traitement thermique compris entre 550°C et 650°C dans une atmosphère oxydante, contenant au moins 5% en volume d'un précurseur en oxygène, la couche superficielle (1) ayant une épaisseur supérieure à 70nm de manière à être intrinsèquement sélective.

## Patentansprüche

1. Verfahren zur Herstellung eines Elements zur Absorption von Sonnenstrahlen für ein konzentrierendes solarthermisches Kraftwerk, umfassend die Bildung einer selektiven Beschichtung (5) auf einer Außenfläche (3) eines Substrats (2) aus rostfreiem Stahl, wobei der rostfreie Stahl des Substrats (2) einen Aluminiumgehalt von mehr als 0,5 Gew.-% aufweist,
**dadurch gekennzeichnet, dass** die Bildung der selektiven Beschichtung (5) die folgenden aufeinanderfolgenden Schritte umfasst:
- die Oberflächenbehandlung des Substrats (2) durch Polieren und
- die Wärmebehandlung des Substrats (2) in oxidierender Atmosphäre, die wenigstens 5 Vol.-% eines Sauerstoffvorläufers enthält, in einem Temperaturbereich zwischen 550 °C und 650 °C, um an der Außenfläche des Substrats (2) wenigstens eine Oberflächenschicht (1) zu bilden, die eine Dicke von mehr als 70 nm aufweist, um intrinsisch selektiv zu sein.

2. Verfahren nach Anspruch 1, **dadurch gekennzeichnet, dass** der rostfreie Stahl des Substrats (2) aus den rostfreien Stählen, die einen Chromgehalt im Bereich zwischen 15 Gew.-% und 25 Gew.-% aufweisen, ausgewählt ist.

3. Verfahren nach Anspruch 2, **dadurch gekennzeichnet, dass** der rostfreie Stahl des Substrats (2) aus den rostfreien Stählen, die einen Chromgehalt im Bereich zwischen 20 Gew.-% und 22 Gew.-% aufweisen, ausgewählt ist.

4. Verfahren nach einem der Ansprüche 1 bis 3, **dadurch gekennzeichnet, dass** der rostfreie Stahl des Substrats (2) ein ferritischer rostfreier Stahl ist.

5. Verfahren nach Anspruch 4, **dadurch gekennzeichnet, dass** der rostfreie Stahl des Substrats (2) aus den ferritischen rostfreien Stählen, die durch die Symbole X10CrAlSi13, X10CrAlSi18, X10CrAlSi25, X3CrAlTi18-2 bzw. X10CrAlSi7 bezeichnet sind, ausgewählt ist.

6. Verfahren nach einem der Ansprüche 1 bis 2, **dadurch gekennzeichnet, dass** der rostfreie Stahl des Substrats (2) ein austenitischer rostfreier Stahl ist.

7. Verfahren nach einem der Ansprüche 2 bis 3, **dadurch gekennzeichnet, dass** der rostfreie Stahl des Substrats (2) einen Aluminiumgehalt im Bereich zwischen 4 Gew.-% und 6 Gew.-% aufweist.

8. Verfahren nach Anspruch 7, **dadurch gekennzeichnet, dass** der rostfreie Stahl des Substrats (2) ein Stahl vom Typ FeCrAl ist.

9. Verfahren nach Anspruch 8, **dadurch gekennzeichnet, dass** der Stahl vom Typ FeCrAl ein Stahl mit der numerischen Bezeichnung 1.4767 ist.

10. Verfahren nach einem der Ansprüche 1 bis 9, **dadurch gekennzeichnet, dass** die Oberflächenschicht (1) eine Dicke im Bereich zwischen 100 nm und 1000 nm aufweist.

11. Verfahren nach einem der Ansprüche 1 bis 10, **dadurch gekennzeichnet, dass** die Rauheit der Außenfläche (3) des Substrats (2) nach dem Polieren zwischen 0,05 µm und 0,4 µm beträgt.

12. Verfahren nach einem der Ansprüche 1 bis 11, **dadurch gekennzeichnet, dass** die Bildung der selektiven Beschichtung (5) einen Schritt zur Bildung einer Antireflexschicht (4) auf der dünnen Oberflächenschicht (1) umfasst.

13. Verfahren zur Herstellung eines konzentrierenden solarthermischen Kraftwerks, das die folgenden Schritte umfasst:
- Bereitstellen eines Substrats (2) aus rostfreiem Stahl mit einer Außenfläche (3), die mit einer sonnenstrahlung-selektiven Beschichtung (5) überzogen ist, wobei das Substrat (2) dazu bestimmt ist, von einem Wärmetauscherfluid durchströmt zu werden,
- Vorsehen eines Spiegels, der dazu eingerichtet ist, einen Teil der auf dem Substrat (2) aufgenommenen Sonnenstrahlung zu konzentrieren,
Verfahren, **dadurch gekennzeichnet, dass** es die Bildung einer selektiven Beschichtung (5) auf einer Außenfläche (3) eines Substrats (2) aus rostfreiem Stahl nach einem der Ansprüche 1 bis 12 umfasst, wobei die Bildung der selektiven Beschichtung (5) die folgenden Schritte umfasst:
- Bereitstellen eines Substrats (2) aus rostfreiem Stahl mit einem Aluminiumgehalt von mehr als 0,5 Gew.-%,
- Polieren der Außenfläche (3) des Substrats,
- Ausbilden einer dünnen Oberflächenschicht (1) auf der polierten Außenfläche (3) des Substrats (2) mittels einer Wärmebehandlung im Bereich zwischen 550 °C und 650 °C in einer oxidierenden Atmosphäre, die wenigstens 5 Vol.-% eines Sauerstoffvorläufers enthält, wobei die Oberflächenschicht (1) eine Dicke von mehr als 70 nm aufweist, um intrinsisch selektiv zu sein.

## Claims

1. A method for producing a solar radiation absorber element, for a thermal concentrating solar power plant, comprising formation of a selective coating (5) on an outer surface (3) of a stainless steel substrate (2),
wherein stainless steel of the substrate (2) presents an aluminium content of more than 0.5% by weight
**characterized in that** formation of the selective coating (5) comprises the following successive steps:
- surface treatment by polishing of the substrate (2),
- and heat treatment of the substrate (2), in an oxidizing atmosphere containing at least 5% in volume of an oxygen precursor, in a temperature range comprised between 550°C and 650°C, to form on the outer surface of the substrate (2) at least one superficial thin layer (1) having a thickness of more than 70nm so as to be intrinsically selective.

2. The method according to claim 1, **characterized in that** the stainless steel of the substrate (2) is chosen from stainless steels presenting a chromium content comprised between 15% by weight and 25% by weight.

3. The method according to claim 2, **characterized in that** the stainless steel of the substrate (2) is chosen from stainless steels presenting a chromium content comprised between 20% by weight and 22% by weight.

4. The method according to one of claims 1 to 3, **characterized in that** the stainless steel of the substrate (2) is a ferritic stainless steel.

5. The method according to claim 4, **characterized in that** the stainless steel of the substrate (2) is chosen from ferritic stainless steels respectively designated by the symbols X10CrAlSi13, X10CrAlSi18, X10CrAlSi25, X3CrAlTi18-2 and X10CrAlSi7.

6. The method according to one of claims 1 to 2, **characterized in that** the stainless steel of the substrate (2) is an austenitic stainless steel.

7. The method according to any one of claims 2 to 3, **characterized in that** the stainless steel of the substrate (2) presents an aluminium content comprised between 4% by weight and 6% by weight.

8. The method according to claim 7, **characterized in that** the stainless steel of the substrate (2) is a steel of FeCrAl type.

9. The method according to claim 8, **characterized in that** the steel of FeCrAl type is a steel of numerical designation 1.4767.

10. The method according to any one of claims 1 to 9, **characterized in that** the superficial layer (1) has a thickness comprised between 100nm and 1000nm.

11. The method according to any one of claims 1 to 10, **characterized in that** the roughness of the outer surface (3) of the substrate (2), after polishing, is comprised between 0.05µm and 0.4µm.

12. The method according to any one of claims 1 to 11, **characterized in that** formation of the selective coating (5) comprises a step of formation of an anti-reflective layer (4) on the superficial thin layer (1).

13. A method for producing a thermal concentrating solar power plant comprising the following steps:
- providing a stainless steel substrate (2) having an outer surface (3) covered by a coating (5) selective to solar radiation, the substrate (2) being designed to have a heat exchange fluid flowing through it,
- providing a mirror arranged to concentrate a part of the solar radiation received on the substrate (2),
a method **characterized in that** it comprises formation of a selective coating (5) on an outer surface (3) of a stainless steel substrate (2) according to any one of claims 1 to 12, said formation of the selective coating (5) comprising the following steps:
- providing a stainless steel substrate (2) having an aluminium content of more than 0.5% by weight,
- polishing the outer surface (3) of the substrate,
- forming a superficial thin layer (1) on the polished outer surface of the substrate (2) by means of heat treatment comprised between 550°C and 650°C in an oxidizing atmosphere, containing at least 5% in volume of an oxygen precursor, the superficial layer (1) having a thickness of more than 70nm so as to be intrinsically.
